# EUROPÄISCHE PATENTANMELDUNG

(11) **EP 1 632 757 A1**
(43) Veröffentlichungstag der Anmeldung: **08.03.2006**
(21) Anmeldenummer: 05105535.8
(22) Anmeldetag: 22.06.2005
(51) Int. Cl.: G01F 23/24

(54) **Stabförmiges Element zum Detektieren eines Flüssigkeitsniveaus und entsprechende Vorrichtung zum Detektieren eines Flüssigkeitsniveaus**

(30) Priorität: 06.09.2004 EP 04021098
(71) Anmelder: Tecan Trading AG, 8708 Männedorf (CH)
(72) Erfinder: Eglauer, Heribert, 83471 Berchtesgaden (DE); Schlager, Gerhard, 5400 Hallein (AT); Kolb, Uwe, 83471 Schönau (DE); Schubert, Ulrich, 82166 München-Gräfeling (DE)
(74) Vertreter: OK pat AG

(57) **Zusammenfassung**

Die Erfindung betrifft Vorrichtungen zur Liquid Level Detektion und insbesondere ein stabförmiges Element (10), das im Wesentlichen zylinderförmig ist und ein erstes Ende (11.1) sowie ein zweites Ende (11.2) aufweist. Das stabförmige Element (10) ist aus Metall gefertigt. In mindestens einem Längenabschnitt (L1), ausgehend von dem zweiten Ende (11.2), ist das stabförmige Element (10) mit einer isolierenden Ummantelung (17) versehen und es ist eine Elektrodenbahn (15) vorgesehen, die sich entlang einer Längsachse (14) des stabförmigen Elements (10) erstreckt ohne mit dem stabförmigen Element (10) elektrisch verbunden zu sein. Die Elektrodenbahn (15) umfasst ein hochohmiges Material.
Es sind zwei abgeflachte Längenabschnitte (13) vorgesehen, wo das Metall des stabförmigen Elements (10) offen liegt, wobei in dem Querschnitt betrachtet die Elektrodenbahn (15) zwischen den beiden abgeflachten Längenabschnitten (13) liegt. Weiterhin sind erste Kontaktmittel vorgesehen, um im Bereich des ersten Endes (11.1) einen elektrischen Kontakt zu dem stabförmigen Element (10) herzustellen, und zweite Kontaktmittel vorgesehen, um im Bereich des ersten Endes (11.1) einen elektrischen Kontakt zu der Elektrodenbahn (15) herzustellen.

## Beschreibung

Die Erfindung betrifft stabförmige Elemente, vorzugsweise Kanülen oder Pipetten, zum Detektieren eines Flüssigkeitsniveaus und entsprechende Vorrichtungen zum Detektieren eines Flüssigkeitsniveaus.

Die vorliegende Anmeldung nimmt die Priorität der europäischen Patentanmeldung EP04021098.1 in Anspruch, die am 6. September 2004 angemeldet wurde.

### Hintergrund der Erfindung

Es gibt zahlreiche Laborsysteme und medizinische, sowie pharmazeutische Geräte, bei denen es wichtig ist den Füllstand in Reagenzgläsern, Titerplatten oder dergleichen zu ermitteln. Besonders wenn es um die Automation von Mess- oder Versuchsabläufen geht, ist eine solche Füllstandsermittlung von Bedeutung.

Ein Probennehmer für Flüssigkeiten ist aus dem deutschen Gebrauchsmuster DE 29780368 U1 bekannt. Es kommen gemäss diesem Gebrauchsmuster metallische Hohlnadeln mit einem oder zwei elektrischen Leitern zum Einsatz, wobei die Hohlnadel innen und aussen mit einer antiadhäsiven, elektrisch isolierenden Schicht beschichtet ist. Die elektrischen Leiter sind so ausgeführt, dass sie nur mit einer sehr geringen unisolierten Fläche Kontakt mit der Flüssigkeit haben, um so das Eintauchen des Probennehmers in die Flüssigkeit feststellen zu können.

Ein ähnlich gearteter Probennehmer mit Niveausensor ist dem deutschen Gebrauchsmuster DE 29609222 U1 zu entnehmen. Auch dieser Probennehmer umfasst eine Hohlnadel, die innen und aussen mit einer antiadhäsiven, elektrisch isolierenden Schicht beschichtet ist. Auf diese Schicht ist eine Leiterbahn aufgebracht.

Die beiden genannten Probennehmer haben den Nachteil, dass sie keine Aussage über die Eintauchtiefe des Probennehmers in einer Flüssigkeit ermöglichen. Die Probennehmer erlauben es lediglich zu erkennen wenn der Probennehmer mit seiner Spitze eine Flüssigkeitsoberfläche berührt. Ausserdem ist die Herstellung recht aufwendig, da die isolierende Beschichtung sowohl innen als auch aussen auf der Hohlnadel vorgesehen werden muss. Damit ist eine Anwendung der in den beiden Gebrauchsmustern behandelten Erfindung auf Hohlnadeln mit kleinem Innendurchmesser besonders schwierig.

Eine solcher Probennehmer eignet sich daher eher nicht für die Detektion des Flüssigkeitsniveaus von kleinen Flüssigkeitsmengen in kleinen Gefässen oder Behältern. Erst recht kann keine Aussage über die Eintauchtiefe des Probennehmers gemacht werden.

Ein anderer Typ von Probennehmer ist in der Europäischen Patentanmeldung EP 670497 A1 beschrieben. Dieser Probennehmer weist ein inneres und ein äusseres leitfähiges Röhrchen auf, die konzentrisch ineinander gesteckt sind. Der Gesamtaufbau ist relativ komplex und derartige Probennehmer sind vermutlich teuer in der Herstellung.

In der Europäischen Patentanmeldung EP 269837 A2 ist ein Probennehmer beschrieben, der ein nichtleitendes Röhrchen umfasst auf dem zwei individuelle Elektroden befestigt sind. Auch dieser Aufbau ist relativ kompliziert. Ausserdem ergibt sich aufgrund des komplizierten Umfangsverlaufs die Gefahr der Probenverschleppung, da Tröpfen an dem Probennehmer hängen bleiben können und somit umgewollt in ein anderes Gefäss gelangen können.

Es stellt sich daher die Aufgabe ein Element zum Detektieren eines Flüssigkeitsniveaus bereit zu stellen, das einfach in der Herstellung und dünn (um unter beengten Verhältnissen, zum Beispiel in Arrays, arbeiten zu können) ist. Ausserdem soll eine entsprechende Vorrichtung zum Detektieren eines Flüssigkeitsniveaus bereitgestellt werden. Weiterhin soll eine möglichst genaue Aussage über die Eintauchtiefe des Elements möglich sein und die erfindungsgemässe Lösung soll eine Probenverschleppung verhindern.

Diese Aufgaben werden erfindungsgemäss gelöst durch ein stabförmiges Element nach Anspruch 1, durch eine Vorrichtung mit mehreren stabförmigen Elementen nach Anspruch 12 und durch eine Vorrichtung zum Erfassen eines Flüssigkeitsniveaus nach Anspruch 14. Bevorzugte Weiterbildungen sind den jeweiligen Unteransprüchen zu entnehmen.

Das erfindungsgemässe System bzw. das erfindungsgemässe Verfahren wird nun an Hand von schematischen, den Umfang der Erfindung nicht beschränkenden Zeichnungen von beispielhaften Ausführungsformen im Detail erläutert. Dabei zeigen:
- Fig. 1A: eine schematische Seitenansicht einer ersten Ausführungsform der Erfindung;
- Fig. 1B: eine schematische Schnittansicht der ersten Ausführungsform der Erfindung;
- Fig. 1C: eine schematische Ansicht von unten der ersten Ausführungsform der Erfindung;
- Fig. 1D: eine schematische Perspektivansicht der ersten Ausführungsform der Erfindung;
- Fig. 2A: eine schematische Seitenansicht, die eine zweite Ausführungsform der Erfindung zeigt;
- Fig. 2B: eine zweite schematische Schnittansicht der zweiten Ausführungsform der Erfindung;
- Fig. 2C: eine schematische Schnittansicht der zweiten Ausführungsform der Erfindung
- Fig. 2D: eine schematische, vergrösserte (Massstab 20: 1) Ansicht des Querschnitts B-B der zweiten Ausführungsform;
- Fig. 3A: eine schematische Darstellung, die eine mögliche Verwendung (Überprüfung des Füllstandes) einer Ausführungsform der Erfindung zeigt;
- Fig. 3B: eine schematische Darstellung, die eine weitere Verwendung (Prozesskontrolle) einer Ausführungsform der Erfindung zeigt;
- Fig. 3C: eine schematische Darstellung, die eine weitere Verwendung (Überprüfung Absaugvorgang) einer Ausführungsform der Erfindung zeigt;
- Fig. 4A: eine schematische Perspektivansicht einer dritten Ausführungsform der Erfindung;
- Fig. 4B: eine schematische Perspektivansicht eines Ausschnitts der dritten Ausführungsform der Erfindung;
- Fig. 4C: eine schematische Seitenansicht der dritten Ausführungsform der Erfindung;
- Fig. 4D: eine schematische Explosionsansicht der dritten Ausführungsform der Erfindung.

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

Im Zusammenhang mit der vorliegenden Erfindung ist verschiedentlich von stabförmigen Elementen die Rede. Dabei handelt es sich vorzugsweise um Kanülen, Pipetten oder Spitzen. Die Kanülen und Pipetten sind innen hohl, die Spitzen hingegen können aus Vollmaterial bestehen, d.h. sie sind nicht hohl. Solche Spitzen haben dann nur die Funktion einer Tastspitze und nicht die Funktion einer Pipette oder eines Dispensers. Vorzugsweise sind die stabförmigen Elemente aus Edelstahl oder aus Edelmetall, wobei Platin sich besonders eignet, hergestellt.

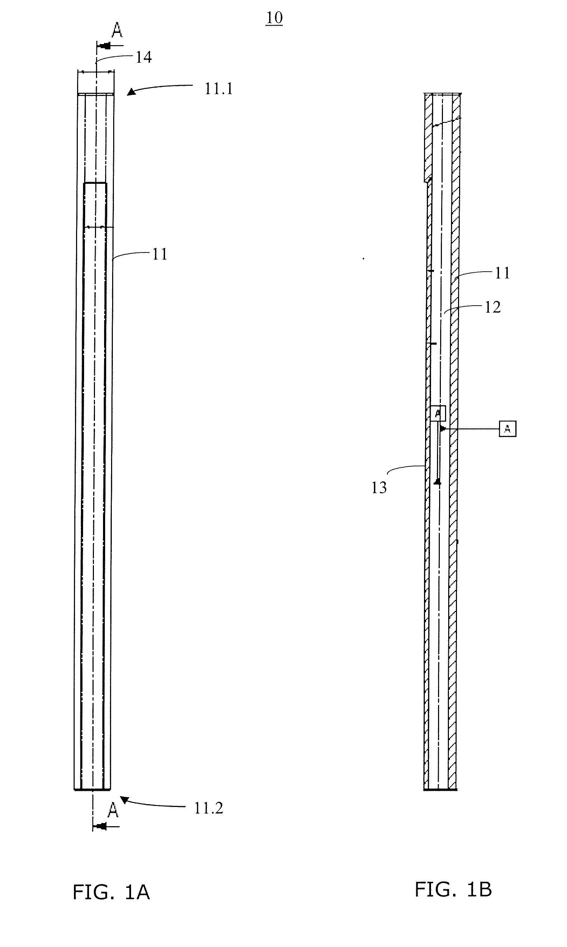

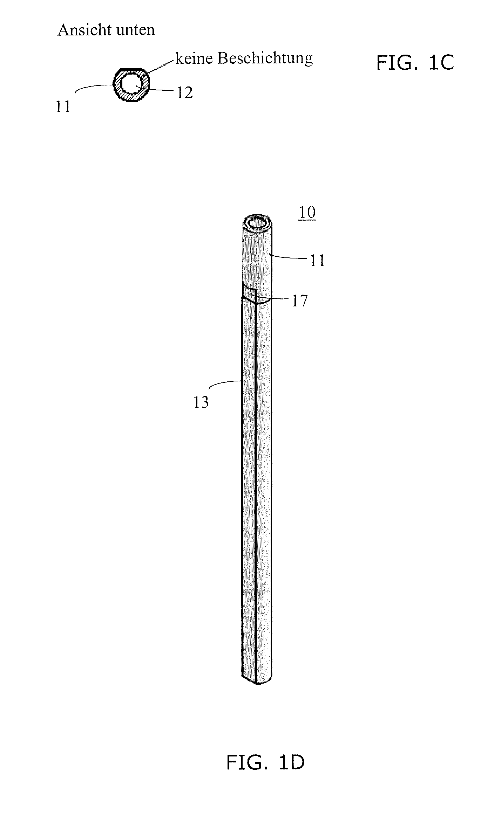

In Fig. 1A - 1B ist eine erste Ausführungsform gezeigt, und zwar ein stabförmiges Element 10, das ein erstes Ende 11.1 und ein zweites Ende 11.2 aufweist. Das stabförmiges Element 10 umfasst einen im Wesentlichen zylinderförmigen Körper 11 (z.B. eine Kanüle oder Pipette). Es sind mindestens zwei Elektroden notwendig, die nicht miteinander elektrisch verbunden sind. Es sind erste Kontaktmittel vorgesehen, um im Bereich des ersten Endes 11.1 einen elektrischen Kontakt zu der ersten der mindestens zwei Elektroden herzustellen, und es sind zweite Kontaktmitteln vorgesehen, um im Bereich des ersten Endes einen elektrischen Kontakt zu einer zweiten der mindestens zwei Elektroden herzustellen. Die stabförmigen Elemente 10 sind innen (mit 12 bezeichnet) vorzugsweise hohl, wie bereits angedeutet.

Das stabförmige Element 10 ist mindestens an einer Seite 13 abgeflacht. Eine der Elektroden (in den Fig. 1A bis 1D nicht erkennbar) ist auf einer Zwischenschicht 17, die im Folgenden als isolierende Ummantelung bezeichnet wird, ausgebildet.

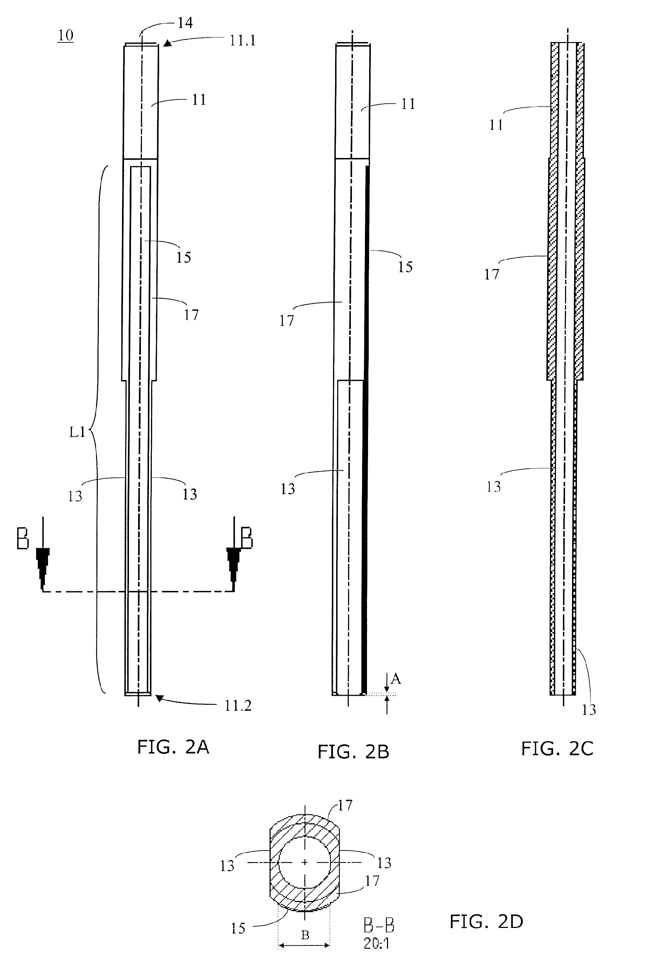

Gemäss Erfindung wird mit einer Wechselspannung der Füllstand ermittelt, wie nun anhand einer weiteren, besonders bevorzugten Ausführungsform beschrieben wird. Diese besonders bevorzugte Ausführungsform ist in den Fig. 2A bis 2D gezeigt Das stabförmige Element 10 ist, wie auch in den Figuren 1A bis 1D, im Wesentlichen zylinderförmig ausgeführt und hat ein erstes oberes Ende 11.1 sowie ein zweites unteres Ende 11.2. Das stabförmige Element 10 ist aus Metall (Edelmetall oder Edelstahl) gefertigt und ist mindestens in einem Längenabschnitt L1, ausgehend von dem zweiten Ende 11.2, mit einer isolierenden Ummantelung 17 versehen. Es ist eine Elektrodenbahn 15 vorgesehen, die sich entlang einer Längsachse 14 des stabförmigen Elements 10 erstreckt, ohne mit dem stabförmigen Element 10 elektrisch verbunden zu sein. Diese Elektrodenbahn 15 ist aus einem hochohmigen Material gebildet. Wie in der Ansicht 2C gezeigt, die senkrecht zu der Längsachse 14 liegt, stellt die Elektrodenbahn 15 ein Kreisbogensegment dar.

Das Kreisbogensegment der Elektrodenbahn 15 hat vorzugsweise eine Bahnbreite, die kleiner ist als 25% des Gesamtzylinderumfangs des stabförmigen Elements 10. Mit anderen Worten ausgedrückt belegt die Elektrodenbahn 15 maximal einen Quadranten des Zylinderquerschnitts.

Anders als in den Figuren 1A - 1D sind nun zwei abgeflachte Längenabschnitte 13 vorgesehen, die von dem zweiten Ende 11.2 ausgehen und sich mindestens ein Stück weit Richtung des ersten Endes 11.1 erstrecken. Im Querschnitt betrachtet (siehe Fig. 2D) grenzen die abgeflachte Längenabschnitte 13 den Umfangsbereich des zylinderförmigen Körpers 11 beidseitig ab, auf dem die Elektrodenbahn 15 angesiedelt ist. Weiterhin sind erste Kontaktmittel vorgesehen, um im Bereich des ersten Endes 11.1 einen elektrischen Kontakt zu dem stabförmigen Element 10 herzustellen. Ausserdem sind zweite Kontaktmittel vorgesehen, um im Bereich des ersten Endes 11.1 einen elektrischen Kontakt zu der Elektrodenbahn 15 herzustellen. Diese Kontaktmittel sind nicht in den Fig. 2A bis 2D gezeigt. Bei dieser Ausführungsform dient der metallische Körper 11 des stabförmigen Elements 10 als erste Elektrode und die Elektrodenbahn 15 als zweite Elektrode.

Die beiden abgeflachten Längenabschnitte 13 verlaufen bei der in den Fig. 2A - 2D gezeigten Ausführungsform der Erfindung im Wesentlichen parallel zu einander. In dem in Fig. 2D gezeigten Schnitt B-B betrachtet, stellen die abgeflachten Längenabschnitte 13 Abflachungen des kreisförmigen Zylinderquerschnitts dar. Im Bereich der abgeflachten Längenabschnitte 13 wurde die Ummantelung 17 entfernt und das Material des zylinderförmigen Körpers 11 abgetragen, was zum Beispiel durch Schleifen geschehen kann. Somit befinden sich zu beiden Seiten der Elektrodenbahn 15 zwei freigelegte, längliche Bereiche 13 des metallischen, zylinderförmigen Körpers 11. Einerseits kann man mit diesem Aufbau die Kontaktfläche zwischen der Flüssigkeit und dem stabförmigen Element 10 im Vergleich zu herkömmlichen Lösungen stark vergrössern. Andererseits erhöht sich die Genauigkeit der Detektion und die Empfindlichkeit.

In einer besonders bevorzugten Ausführungsform umfasst die Ummantelung 17 ein Polymermaterial, das vorzugsweise hydrophob ist. Dadurch kann einerseits eine Probenverschleppung verhindert werden, da keine Tropfen an dem stabförmigen Element 10 hängen bleiben. Primär aber dient die hydrophobe Ummantelung dazu, dass zwischen der Elektrodenbahn 15 und den parallel dazu verlaufenden Abflachungen 13 keine Flüssigkeitstropfen oder kein Flüssigkeitsfilm hängen bleibt. Dies ist bei den erfindungsgemässen Ausführungsformen von besonderer Bedeutung, da sie sehr empfindlich sogar auf einzelne Tropfen reagiert, wenn diese zwischen der Elektrodenbahn 15 und den parallel dazu verlaufenden Abflachungen 13 hängen bleiben.

Besonders bevorzugt ist eine Schichtdicke der Ummantelung 17 zwischen 5 und 40 µm. Besonders bewährt hat sich eine Schichtdicke um ca. 30 µm.

Gemäss Erfindung kann mindestens eine weitere Elektrode vorgesehen sein, die vorzugsweise im Bereich des ersten Endes 11.1 eine elektrische Kontaktfläche aufweist.

Der Widerstand kann bei verschiedenen Eintauchtiefen der Kanüle ermittelt und dann rechnerisch daraus der Füllstand bestimmt werden. Das geschieht gemäss Erfindung wie folgt. Sobald das stabförmige Element 10 in eine leitende Flüssigkeit eintaucht, wird eine elektrisch leitende Verbindung (in der Art eines Kurzschlusses), zwischen der als erste Elektrode dienenden Elektrodenbahn 15 und dem als zweite Elektrode dienenden leitfähigen Körper 11 gebildet. Man kann nun, zum Beispiel durch eine Widerstandsmessung oder durch Beobachtung des Spannungsverhaltens den Moment des Eintauchens in die Flüssigkeit ermitteln. Taucht man das stabförmige Element 10 nun weiter in die Flüssigkeit ein, so wird die Elektrodenbahn 15 bereits weiter oben "abgegriffen" und mit dem metallischen Körper 11 im Bereich der Abflachungen 13 horizontal kurzgeschlossen. Man kann dieses Verhalten mit einem Schiebepotentiometer vergleichen, bei dem der Mittelabgriff dem Flüssigkeitsniveau entspricht. Schiebt man den Mittelabgriff bis ans untere Ende des Schiebepotentiometers (dies entspricht dem Fall wo das stabförmige Element 10 soeben in die leitende Flüssigkeit eintaucht), so ist der Widerstand maximal. Schiebt man den Mittelabgriff des Schiebepotentiometers nach oben (in Richtung des ersten Endes 11.1), so reduziert sich der Widerstand. Dieser Vorgang ist mit dem zunehmenden Eintauchen des stabförmigen Elements 10 in die Flüssigkeit zu vergleichen. Ein hochohmiges Widerstandsmaterial ist besonders geeignet, da man damit eine gute Ortsauflösung in z-Richtung bekommt.

Wenn das Element 10 hohl ist, kann es auch zum Abgeben oder Aufnehmen von Flüssigkeit verwendet werden. Gleichzeitig kann mit den Elektroden dieser Vorgang beobachtet und/oder gesteuert werden.

An der Oberfläche einer zu detektierenden Flüssigkeit kann ein kleiner Meniskus vorhanden sein. Das Vorhandensein eines Meniskus kann auch über den Widerstand der Elektroden und die z-Position des stabförmigen Elements 10 ermittelt werden.

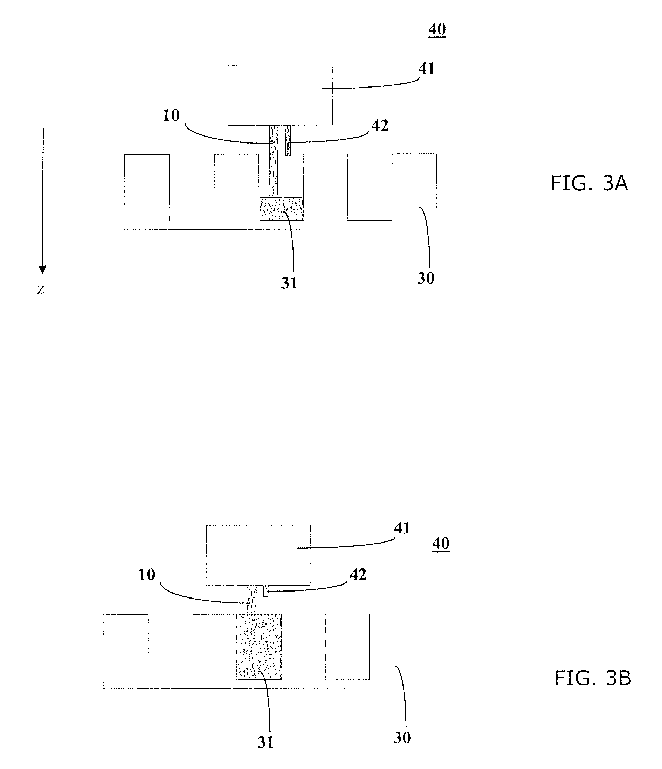

Fig. 3A zeigt eine erfindungsgemässe Vorrichtung 40 mit einer Schaltung 41, einer Kanüle 10, einem Well 30 und einer Flüssigkeit 31. Bei der Kanüle 10 handelt es sich um eine Kanüle, die analog zu dem in den Fig. 2A bis 2D gezeigten stabförmigen Element 10 ausgeführt ist. Bewegt man die Kanüle 10 in z-Richtung und beobachtet zum Beispiel die Spannung zwischen den Elektroden, d.h. zwischen dem elektrisch leitenden Körper 11 und der Elektrodenbahn 15, (was mit der Schaltung 41 gemacht werden kann), kann sehr genau ermittelt werden, auf welchem Niveau sich die Flüssigkeit 31 befindet. Dieser Vorgang wird mit LLD bezeichnet (LLD = Liquid Level Detektion).

Mit einem erfindungsgemässen stabförmigen Element 10 und mit einer entsprechenden erfindungsgemässen Vorrichtung 40 (die zum Beispiel Teil eines Washers sein kann) kann man Füllstande von pipettierten Mikrotitterplatten, die ausserhalb der Vorrichtung 40 befüllt wurden, überprüfen. Die Volumina werden über die Füllstande innerhalb der Mikrotitterplatten bzw. die z-Höhe der stabförmigen Elemente 10 und die benannten Volumina des Mikrotitterplatten Herstellers für bestimmte Füllhöhen unter Berücksichtigung der Toleranzen bestimmt.

Die Vorrichtung 40 kann zum Waschen von Wells 30 verwendet werden, wie in Fig. 3B angedeutet. Es wird Flüssigkeit 31 durch eine Dispensiernadel 42 in das Weil 30 eingespritzt und die Elektroden des stabförmigen Elements 10 dienen der Überwachung des Waschvorgangs.

Es kann mit der Erfindung eine online Prozesskontrolle des Überlauf-Waschens oder Waschens realisiert werden. Dabei kann man zum Beispiel bei einem 96er-Well zwischen 50 und 400 µl und mit einer Auflösung von besser als +/- 20 µl quasi kontinuierlich überprüfen, ob dispensiert und abgesaugt wird, bzw. ob die Dispensiernadel 42 oder die Absaugnadel 10 verstopft ist, wie in Fig. 3B angedeutet.

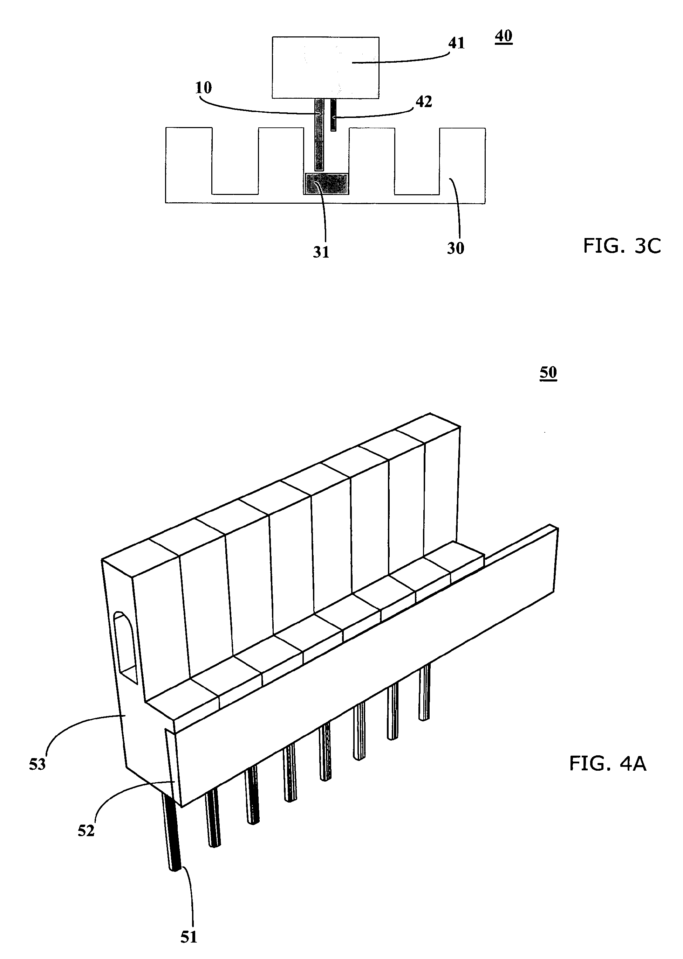

Die Vorrichtung 40 kann auch zum Absaugen von Wells 30 verwendet werden, wie in Fig. 3C angedeutet. Es wird über das stabförmige Element 10 (das in diesem Fall als Absaugnadel dient) Flüssigkeit 31 aus dem Well 30 abgesaugt und die Elektroden des stabförmigen Elements 10 dienen der Überwachung, ob sich der Füllstand während dem Absaugen wirklich reduziert.

Mit der erfindungsgemässen Vorrichtung 40 kann man überprüfen, ob ein Absaugvorgang stattgefunden hat. Ursprünglich volle Wells 30 von Mikrotitterplatten werden abgesaugt und es wird in der Mikrotitterplatte mit der Vorrichtung 40 überprüft, ob alle Flüssigkeit abgesaugt wurde. Das eventuell in einem Well 30 verbleibende Restvolumen der Flüssigkeit kann mit einer hohen Auflösung mittels der Vorrichtung 40 detektiert werden.

Folgende Situationen können zum Beispiel in einem Washer eintreten. Ist mindestens eine der Dispensiernadeln 42 verstopft, so sinkt der Füllstand in dem entsprechenden Well 30 und die Absaugnadel 10 saugt Luft. Falls mindestens eine der Absaugnadeln 10 verstopft sein sollte, so steigt der Füllstand und die Dispensierpumpe muss sofort abgeschaltet werden, um ein Überlaufen des Wells 30 zu vermeiden. Sind sowohl Dispensiernadel 42 als auch Absaugnadel 10 verstopft, so saugt die Absaugnadel 10 Luft oder der Füllstand steigt. Auch hier muss die Dispensierpumpe abgeschaltet werden. Mit einer erfindungsgemässen Vorrichtung 40 kann man derartige Situationen erkennen und rechtzeitig einschreiten.

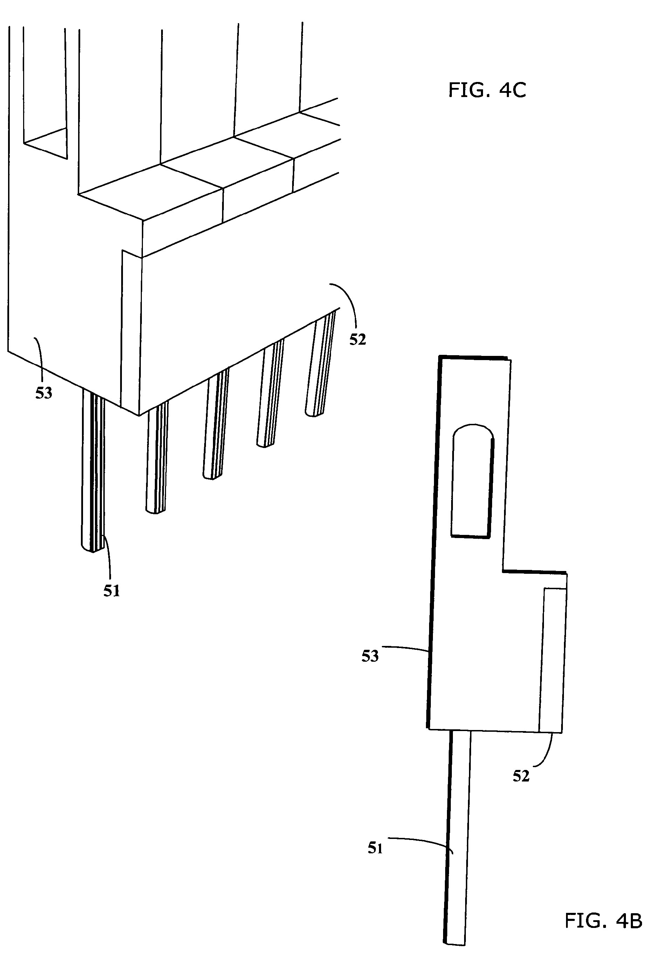

In den Figuren 4A - 4D ist ein Array 50 zum Pipettieren, und/oder Dispensieren, und/oder Waschen, und/oder Aspirieren gezeigt. Das Array 50 umfasst mehrere stabförmige Elemente 51, analog zu den in den Fig. 1A - 1D oder 2A - 2C gezeigten. Es ist eine Schaltung (Elektronik) vorgesehen, die zum Beispiel auf einer Platine 52 sitzt. Die Elemente 51 werden in einem Gehäuse 53 gehalten. In Fig. 4C ist die abgeflachte Seite der Elemente 51 mit der Elektrodenbahn 15 gezeigt.

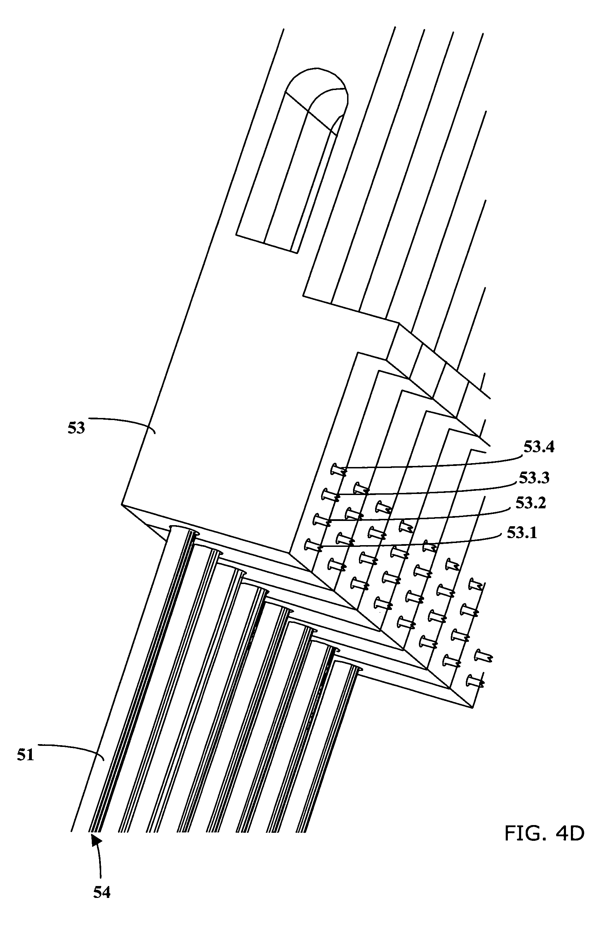

Fig. 4D zeigt eine Situation ohne Platine 52. Es sind Kontaktstifte 53.1, 53.2, 53. 3 und 53.4 zu erkennen, die Kontakt herstellen zwischen der Schaltung auf der Platine 52 und den Elektrodenbahnen, respektive den Kanülen. In diesem Zusammenhang ist anzumerken, dass die Anzahl der Kontaktstifte mit der Anzahl der zu kontaktierenden Elektroden korreliert. Werden zum Beispiel 8 stabförmige Element nach Fig. 2A in einem Array nach Fig. 4D verwendet, so braucht man insgesamt 16 Kontaktstifte (2 Stifte pro stabförmigem Element 10).

Die stabförmigen Elemente 10 lassen sich gemäss Erfindung relativ einfach und kostengünstig herstellen. Ausserdem sind sie sehr zuverlässig und robust. Sie ermöglichen eine schnelle und sehr genaue Aussage über die Eintauchtiefe in einer Flüssigkeit.

In einem ersten Herstellungsschritt wird das stabförmige Element, nachdem es gereinigt und entfettet wurde, mit der Ummantelung 17 versehen. Vorzugsweise handelt es sich um ein Polymermaterial, das als Ummantelung 17 verwendet wird. Vorzugsweise wird die Ummantelung 17 nur auf denjenigen Abschnitt L1 aufgetragen, der später in Flüssigkeit getaucht wird und auf dem sich die Elektrodenbahn 15 befinden wird. Das Polymermaterial ist vorzugsweise hydrophob und sollte möglichst auch besonders chemikalienbeständig sein. Nach dem Auftragen der Ummantelung 17 wird diese vorzugsweise bei einer Temperatur über 200 Grad Celsius eingebrannt (durch Ausglühen). Besonders geeignet sind Temperaturen um die 300 Grad Celsius. Wichtig ist, dass dieser Vorgang spannungsfrei verläuft.

In einem darauf folgenden Schritt wird vorzugsweise mit einer Schattenmaske ein hochohmiges Widerstandsmaterial (vorzugsweise TiN) aufgesputtert. Dieser Vorgang geschieht in einer Vakuumkammer einer Sputteranlage. Wird nur eine Elektrodenbahn 15 gebraucht, so kann man das stabförmige Element 10 in einen Schlitz einer Schattenmaske einlegen, die nur den Längenabschnitt L1 mit einer Breite freilässt, die ungefähr so breit ist wie die Bahnbreite B der späteren Elektrodenbahn 15. Es liegt auf der Hand, dass durch die Wahl des Widerstandmaterials, aber auch durch die Geometrie der Elektrodenbahn 15 (Schichtdicke und Bahnbreite) der Widerstand pro Längeneinheit verändert werden kann.

Die Elektrodenbahn 15 hat eine Dicke, die zwischen 20nm und 500nm beträgt.

Nun werden die beiden Abflachungen erzeugt. Dieser Schritt wird vorzugsweise vor dem Sputtern ausgeführt, kann aber auch nach dem Sputter ausgeführt werden. Die beiden Abflachungen können durch Schleifen hergestellt werden. Vorzugsweise verlaufen die beiden abgeflachten Abschnitte 13 parallel zu einander. Wie der Fig. 2D zu entnehmen ist, begrenzen die beiden abgeflachten Abschnitte 13 denjenigen Zylinderbogenabschnitt, auf dem die Elektrodenbahn 15 zu liegen kommt. Beim Schleifen wird sowohl die Ummantelung 17 als auch ein Teil des metallischen Körpers 11 entfernt.

Die beiden abgeflachten Seiten 13 müssen nicht parallel verlaufen. Sie können auch in einem gewissen Winkel zueinander angeordnet sein, wobei zu beachten ist, dass die Wandstärke des zylinderförmigen Teils 11 nicht zu gering wird.

Typischerweise weist das stabförmige Element 10 am zweiten Ende 11.2, d.h. am unteren Ende, einen kleinen Radius im Übergangsbereich zwischen der Mantelfläche es Zylinders und der Stirnfläche auf. Um zu verhindern, dass dort ein Kurzschluss zwischen dem unteren Ende der Elektrodenbahn 15 und dem metallisch leitenden Körper 11 des stabförmigen Elements 10 besteht, wird die Elektrodenbahn 15 so ausgeführt, dass sie einen kleinen Abstand A zur untersten Kante des stabförmigen Elements 10 aufweist. Dieser Abstand A beträgt typischerweise 0,1 mm (siehe Fig. 2B).

## Patentansprüche

1. Stabförmiges Element (10), das im Wesentlichen zylinderförmig ist und ein erstes Ende (11.1) sowie ein zweites Ende (11.2) aufweist, wobei das stabförmige Element (10) aus Metall gefertigt ist, und
- das stabförmige Element (10) mindestens in einem Längenabschnitt (L1) ausgehend von dem zweiten Ende (11.2) mit einer isolierenden Ummantelung (17) versehen ist,
- eine Elektrodenbahn (15) vorgesehen ist, die sich entlang einer Längsachse (14) des stabförmigen Elements (10) erstreckt ohne mit dem stabförmigen Element (10) elektrisch verbunden zu sein, wobei die Elektrodenbahn (15) ein hochohmiges Material umfasst und in einem Querschnitt, der senkrecht zu der Längsachse (14) liegt, ein Kreisbogensegment darstellt,
- zwei abgeflachte Längenabschnitte (13) ausgehend von dem zweiten Ende (11.2) an dem stabförmigen Element (10) vorgesehen sind und im Bereich dieser beiden abgeflachten Längenabschnitte (13) das Metall des stabförmigen Elements (10) offen liegt, wobei in dem Querschnitt betrachtet die Elektrodenbahn (15) zwischen den beiden abgeflachten Längenabschnitten (13) liegt,
- erste Kontaktmittel (53.1) vorgesehen sind, um einen elektrischen Kontakt zu dem stabförmigen Element (10) herzustellen,
- zweite Kontaktmittel (53.2) vorgesehen sind, um einen elektrischen Kontakt zu der Elektrodenbahn (15) herzustellen.

2. Stabförmiges Element (10) nach Anspruch 1, **dadurch gekennzeichnet, dass** es sich um eine Kanüle, Pipette oder Spitze handelt, die hohl ist.

3. Stabförmiges Element (10) nach Anspruch 2, **dadurch gekennzeichnet, dass** die beiden abgeflachten Längenabschnitte (13) im Wesentlichen parallel zu einander verlaufen und in dem Querschnitt betrachtet Abflachungen des kreisförmigen Zylinderquerschnitts darstellen.

4. Stabförmiges Element (10) nach einem der vorhergehenden Ansprüche, **dadurch gekennzeichnet, dass** die Elektrodenbahn (15) als erste Elektrode und das stabförmige Element (10) als zweite Elektrode einer Widerstandmessbrücke oder einer Messschaltung (41) dienen.

5. Stabförmiges Element (10) nach Anspruch 4, **dadurch gekennzeichnet, dass** sich mindestens eine der beiden Elektroden bis zu dem zweiten Ende (11.2) erstrecken.

6. Stabförmiges Element (10) nach Anspruch 4, **dadurch gekennzeichnet, dass** die erste Elektrode auf die Ummantelung (17), vorzugsweise durch Sputtern, aufgebracht ist.

7. Stabförmiges Element (10) nach einem der vorhergehenden Ansprüche,
**dadurch gekennzeichnet, dass**
(10) mindestens eine weitere Elektrode vorgesehen ist, die vorzugsweise im Bereich des ersten Endes (11.1) eine elektrische Kontaktfläche aufweist.

8. Stabförmiges Element (10) nach Anspruch 4, **dadurch gekennzeichnet, dass** die Ummantelung (17) ein Polymermaterial umfasst, das vorzugsweise hydrophob ist.

9. Stabförmiges Element (10) nach Anspruch 4, **dadurch gekennzeichnet, dass** die Ummantelung eine Schichtdicke zwischen 5 und 40 µm, vorzugsweise um ca. 30 µm aufweist.

10. Stabförmiges Element (10) nach Anspruch 4, **dadurch gekennzeichnet, dass** das Kreisbogensegment der Elektrodenbahn (15) eine Bahnbreite (B) hat, die kleiner ist als 25% des Gesamtzylinderumfangs des stabförmigen Elements (10).

11. Stabförmiges Element (10) nach Anspruch 4, **dadurch gekennzeichnet, dass** die Elektrodenbahn (15) eine Dicke hat, die zwischen 20nm und 500nm beträgt.

12. Vorrichtung (40; 50) mit mehreren stabförmigen Elementen (10) nach einem der vorhergehenden Ansprüche, **dadurch gekennzeichnet, dass** die stabförmigen Elemente (10) nebeneinander in einem Verteilerkopf (53) angeordnet und durch den Verteilerkopf (53) getragen werden, wobei am Verteilerkopf (53) elektrische Anschlüsse (53.1 - 53.4), die je einzeln federnd ausgeführt sind, vorgesehen sind, um jede die Elektrodenbahnen (15) und jedes der stabförmigen Element (10) elektrisch zu kontaktieren.

13. Vorrichtung (40; 50) nach Anspruch 12, **dadurch gekennzeichnet, dass** es sich um ein Array zum Pipettieren, und/oder Dispensieren, und/oder Waschen, und/oder Aspirieren handelt.

14. Vorrichtung (40; 50) zum Erfassen eine Flüssigkeitsniveaus, mit einem oder mehreren stabförmigen Elementen (10) nach einem der vorhergehenden Ansprüche, **dadurch gekennzeichnet, dass**
- eine Spannungsquelle vorgesehen ist, um eine Wechselspannung zwischen der Elektrodenbahn (15) eines stabförmigen Elements (10) und diesem stabförmigen Element (10) anzulegen, und
- eine Schaltung (41; 52) vorgesehen ist, die zur Auswertung von Strom und/oder Spannungswerten ausgelegt ist, die zwischen der Elektrodenbahn (15) und dem stabförmigen Element (10) abgreifbar sind.

15. Vorrichtung (40; 50) nach Anspruch 14, **dadurch gekennzeichnet, dass** die Schaltung (41; 52)
- einen Multiplexer umfasst, um abwechselnd die Strom und/oder Spannungswerte der verschiedenen stabförmigen Elemente (10) auswerten zu können, und
- einen Analog-Digital-Wandler umfasst, der dem Multiplexer nachgeschaltet ist.
